# EUROPEAN PATENT SPECIFICATION

(11) **EP 1 280 411 B1**
(45) Date of publication and mention of the grant of the patent: **01.10.2008**
(21) Application number: 01929565.8
(22) Date of filing: 13.04.2001
(51) Int. Cl.: A23D 9/00

(54) **POURABLE SHORTENING COMPOSITION**
VERGIESSBARE BACKFETTZUSAMMENSETZUNG
MATIERE GRASSE FLUIDE

(30) Priority: 09.05.2000 EP 00201664
(43) Date of publication of application: 05.02.2003
(73) Proprietor: Unilever N.V., 3013 AL Rotterdam (NL); Unilever PLC, London Greater London EC4P 4BQ (GB)
(72) Inventor: CORNELISSEN, Johannes M. Unilever Bestfoods UK Ltd, Crawley Sussex RH10 9RQ (GB); VAN OOSTEN, Cornelis Willem, NL-3133 AT Vlaardingen (NL); SEGERS, Marcel Caroline H., M., NL-3071 JL Rotterdam (NL)
(74) Representative: Kan, Jacob Hendrik
(86) International application number: PCT/EP2001/004308
(87) International publication number: WO 2001/084945

(56) References cited:
- EP-A- 0 063 835
- WO-A-94/10851
- WO-A-97/33955
- US-A- 4 399 165
- US-A- 5 436 021
- PATENT ABSTRACTS OF JAPAN vol. 1997, no. 10, 31 October 1997 (1997-10-31) -& JP 09 143491 A (TAIYO KAGAKU CO LTD), 3 June 1997 (1997-06-03)
- DATABASE WPI Section Ch, Week 198414 Derwent Publications Ltd., London, GB; Class D13, AN 1984-086176 XP002150222 MADSEN J GRINDSTED: "Frying margarine with low salt content - contg. citric acid ester as anti-spattering agent" & RESEARCH DISCLOSURE, vol. 239, no. 018, 10 March 1984 (1984-03-10), Emsworth, GB

## Description

The invention relates to a pourable shortening composition with improved secondary spattering behaviour upon use in shallow frying.

### Background

Shortening compositions are fat or oil based compositions which are essentially free of water. Essentially free of water means that the water level is below 5 wt% on total product weight.
Pourable, water free, oils are also encompassed in the invention.

These compositions are well known frying agents.
Use of these frying agents is often accompanied by spattering.
Spattering can be measured by determining the spattering value according to the method illustrated in the examples. The secondary spattering value, SV2, represents spattering upon incorporation of a food product such as meat in a heated shallow frying product.

Research Disclosure 239 no. 018 concerns a pourable frying margarine with a low salt content, comprising citric acid ester of fatty acid mono glycerides and hydrolysed soy bean lecithin. The compositions are said to possess good anti-spattering properties, but secondary spattering data are not given.

EP-A-063 835 discloses fat compositions containing fat, lecithin and hydrophilic silica. The compositions do not contain citric acid ester of a partial fatty acid glyceride.

JP-09 143491 discloses a "quality improving agent" for liquid oils and fats, containing citric acid monoglycerides (a citric acid ester of a partial fatty acid glyceride), wherein said agent helps to prevent discoloration and smell upon heating the liquid oils and fats and is capable of reducing the dynamic boundary tension between said liquid oils and fats with water. These compositions do not contain salt.

US 4, 399, 165 discloses an edible oil composition suitable for frying applications, comprising a liquid oil, an emulsifier, a browning substance and an effective amount of a stabilising material. Suitable emulsifiers mentioned in this document include monoglycerides, lecithins, citric acid esters, tartaric acid esters, lactic acid esters and mixtures thereof.

The examples in US 4,399,165 show that products comprising a soy lecithin showed limited spattering when beef was fried.

Furthermore EP-A-477,825 and EP-A-771,531 disclose the use of citric acid esters as synthetic antioxidants.
US 3,946,122 and US 5,436,021 disclose water and oil emulsions comprising a citric acid ester of a mono- or diglyceride of fatty acids.
EP-A-775,444 discloses a pourable fat composition comprising herbs, spices, nuts or seeds and 1-10 wt% salt.

Associated with the use of lecithin in an edible frying composition is its origin which can be in genetically modified soy beans. Although this source is scientifically considered safe, certain consumers tend to be reluctant in use of frying products comprising lecithin derived from a genetically modified source.
The invention aims at providing a pourable shortening composition which shows spattering behaviour comparable to spattering behaviour of products comprising a lecithin, but wherein the presence of a lecithin is not required. Moreover spattering behaviour, especially secondary spattering behaviour, of the products according to US 4,399,165 is desirably further improved.

It has now surprisingly been found that a pourable shortening composition comprising a salt and a citric acid ester of a partial fatty acid glyceride, shows very good secondary spattering values.

### Definition of the invention

Therefore the invention relates to a pourable shortening composition comprising a salt and a citric acid ester of a partial fatty acid glyceride, wherein the ester is present in an amount of from 0.1 to 1.0 wt% on total weight of the shortening composition and wherein the salt is present in an amount of from 0.1 to 3 wt% on total weight of the shortening composition.

### Detailed description of the invention

Products according to the invention are pourable products. Pourability is evidenced by a Bostwick value of at least 7 at 15 °C. The method to determine Bostwick value is described in the examples.

All concentrations in this specification are weight concentrations unless indicated otherwise.

The pourable shortening according to the invention comprises a citric acid ester of a partial fatty acid glyceride.
Partial fatty acid glycerides are monoglycerides and diglycerides. Esters with a combination of these are also encompassed in the invention.

Citric acid and a monoglyceride (monoester of glycerol and a fatty acid) or diglyceride (di-ester of glycerol and two fatty acids) can form an ester under certain reaction conditions. The resulting reaction product mainly comprises citric acid, wherein one carboxylic group is esterified with one of the free hydroxyl groups of the glycerol backbone of the mono- or diglyceride.
Some di- or even tri-esterified citric acid may be present in the resulting reaction mixtures, depending on the specific reaction conditions used such as temperature and reaction time.
One monoglyceride molecule can also be esterified with more than one citric acid molecule.

A suitable process for the manufacture of citric acid esters of partial glycerides is disclosed in US 4,071,544. As disclosed in this document, the relative amount of citric acid to partial fatty acid glycerides in the reaction mixture determines the properties of the final product.

According to a preferred aspect of the invention the ester is a citric acid ester of a monoglyceride and diglyceride mixture, comprising at least 30 wt% of the monoglyceride, more preferred at least 55 wt%, most preferred at least 90 wt% of the monoglyceride.
Examples of suitable starting compounds are Hymono^{tm} (comprising at least 90 wt% monoglycerides on total amount of partial glycerides) or Admul^{tm} (comprising at least 55 wt% monoglycerides on total amount of partial glycerides).

The fatty acid chains of the mono or diglyceride can be any fatty acids. Preferred fatty acid chains are selected from the group of fatty acids having a chain length of between 4 and 24 carbon atoms. These correspond to the fatty acids found in most well known triglyceride oils.

In case of esters of citric acid with diglycerides, the two fatty acid chains may be the same or different.

In a highly preferred embodiment, the shortening composition comprises a citric acid ester with a monoglyceride with a fatty acid chain comprising C16 or C18 fatty acids.

Examples of suitable fatty acids are fatty acids derived from a vegetable fat such as soy bean oil, rapeseed oil, palm oil, sunflower oil, corn oil, safflower oil, cotton seed oil, palmkernel oil, coconut oil, linseed oil, butter or fractions thereof, or lauric oils.

In a highly preferred embodiment of the invention, the ester is a citric acid ester with monoglyceride and diglyceride made from an unsaturated oil with an iodine value of at least 90, preferably sunflower oil.

Suitable citric acid esters include Grindsted^{tm} CITREM LR 10, Grindsted^{tm} CITREM BC-FS, Lamegin^{tm} ZE 306, Myvatem^{tm} SC, CITREM^{tm} 2931, Pålsgaard^{tm} 3301, Lamegin^{tm} ZE 309 liquid.

The amount of ester in the shortening according to the invention can vary, depending on the other ingredients and purpose of use of the frying composition. It has surprisingly been found that very low levels of the citric acid ester already lead to very good spattering results. This is considered surprising because lecithin is widely recommended as the best anti-spattering agent, and hence the surprisingly good result when using a combination of the ester and salt were not expected. Moreover general supplier recommendations for use of citric acid esters in an emulsion include levels of at least 0.6 wt% on fat level, whereas according to the current most preferred embodiments, levels of only 0.3 wt% ester in combination with salt were already found to lead to secondary spattering valuers of around 6.
Therefore in a preferred embodiment, the invention relates to pourable shortening compositions wherein the ester is present in an amount of from 0.25 to 0.5 wt%, preferably from 0.25 to 0.35 wt% on total weight of the shortening composition.

Any known salt can be used in the shortening composition according to the invention, but for reasons of taste and low price level, sodium chloride is highly preferred. Examples of other suitable salts are potassium chloride, choline chloride, ammonium chloride.

The amount of salt used is dependent on the spattering behaviour of the composition and the amount of salty taste desired for gravy and for food products fried in the shortening composition according to the invention.
It was surprisingly found that in shortening compositions comprising citric acid, the amount of salt required to impart a salty taste to gravy resulting after frying, is less than required in the same composition wherein citric acid ester is replaced by a lecithin. Based on these results the shortening composition comprises salt in an amount of from 0.1 to 3 wt%, more preferred from 0.3 to 2.0 wt%, most preferred from 0.4 to 1.0 wt% on total weight of the shortening composition.

Salt is believed to be present in the shortening composition in the form of small particulate material.

Under the influence of gravity large particles will sink to the bottom of a jar comprising the pourable composition. This can at least partly be overcome by using a microcrystalline salt, preferably microcrystalline sodium chloride.
An alternative method to prevent settling of the salt particles is by incorporation of fat crystals into the shortening composition as is described below.

A delicate balance of the combination of the citric acid ester level and the salt level leads to products with a surprisingly high secondary spattering value of a least 4.0. Hence such products are preferred.

The basis of the pourable shortening composition according to the invention is formed by an oil. Any oil which imparts the desired pourability can be used for this purpose. Examples of suitable oils include sunflower oil, corn oil, safflower oil, grape seed oil, soy bean oil, ground nut oil, cotton seed oil, olive oil, or combinations thereof. These oils (all of which may be (partly) hydrogenated and/or winterised), are preferably refined in a common way and preferably have a bland taste and flavour.

In addition to this base oil, the shortening composition optionally comprises a stabilising oil component which imparts stability to the final product. For example hardened rapeseed oil is a well known stabilising oil component. The amount of hardened rapeseed oil is preferably from 1 to 3 wt% on total product weight.

Other examples of suitable stabilising oils are hardened fish oil, hardened ground nut oil, hardened sunflower oil, or mixtures thereof.

Optionally the pourable shortening comprises other ingredients such as emulsifier, colouring agent, flavour components, preservatives, vegetable or herb pieces.

In a further aspect the invention relates to use of a combination of a citric acid ester of partial fatty acid glycerides and a salt to reduce secondary spattering of a pourable frying composition.

The pourable shortening can be prepared by any commonly known processes for the preparation of a pourable shortening. For example the method according to US 4,399,165 can be followed.

Another suitable process comprises the steps of blending stabilising oil and base oil at a temperature of 50 to 80 °C, preferably 60 to 80 °C, adding the fat soluble ingredients including citric acid ester, and adding salt, subjecting the resulting mixture to a homogenisation treatment, preferably at a temperature of from 10 to 20 °C, slowly stirring the mixture for a period of from 20 to 30 minutes and filling it into bottles.

The invention is illustrated by the following examples.

### Examples

### General methods

### Measuring pourability

Pourability or squeezability is measured according to the standard Bostwick protocol. The Bostwick equipment consists of a 125 ml reservoir provided with a outlet near the bottom of a horizontally placed rectangular tub and closed with a vertical barrier. The tub's bottom is provided with a 25 cm measuring scale, extending from the outlet of the reservoir. When equipment and sample both have a temperature of 15°C, the reservoir is filled with 125 ml of the sample after it has been shaken by hand ten times up and down. When the closure of the reservoir is removed the sample flows from the reservoir and spreads over the tub bottom. The path length of the flow is measured after 30 seconds. The value, expressed as cm per 30 seconds is the Bostwick rating, which is used as yard stick for pourability.
The maximum value that can be determined with this measurement is 23.

### Determination of spattering value

The spattering behaviour of food products according to the invention was evaluated after storage of the products for 8 days at 5 °C.
Primary spattering (SV1) was assessed under standardised conditions in which an aliquot of a food product was heated in a glass dish and the amount of fat spattered onto a sheet of paper held above the dish was assessed after the water content of the food product had been driven off by heating.

Secondary spattering (SV2) was assessed under standardised conditions in which the amount of fat spattered onto a sheet of paper held above the dish is assessed after pouring of a quantity of 10 ml water into the dish.

In assessment of both primary and secondary spattering value about 20 g shortening product was heated in a glass dish on an electric plate set at about 205 °C. The fat that spattered out of the pan by force of expanding evaporating water droplets was caught on a sheet of paper situated above the pan. The image obtained was compared with a set of standard pictures number 0-10 whereby the number of the best resembling picture was recorded as the spattering value. 10 indicates no spattering and zero indicates very bad spattering. The general indication is as follows.

| *Score* | *Comments* |
|---|---|
| 10 | excellent |
| 8 | good |
| 6 | Passable for SV1 (good for SV2) |
| 4 | unsatisfactory for SV1, passable for SV2 |
| 2 | very poor |

Typical results for household margarines (80 wt% fat) are 8 for primary spattering (SV1) and 5 for secondary spattering (SV2) under the conditions of the above mentioned test.

### Example 1

Under slow stirring (30 rev/min, 0.5 Hz), a mixture of 20 wt% hardened rapeseed oil with a slip melting point of 70 °C and 80 wt% sunflower oil were heated to 70 °C and added to the remaining sunflower oil which was at a temperature of 15 °C. All fat soluble ingredients were added and finally microcrystalline salt was added. The total mixture was homogenised for 5 minutes in an UltraTurrax running at 1150 rev/min (19 Hz). The mixture was left for another 20 minutes under slow stirring. The product was packed in 0.9 L bottles, which were sealed.

Product composition and results for example 1-3 is shown in table 1.

**Table 1**

| Ingredient (wt %) | Ex 1 | Ex 2 | Ex 3 |
|---|---|---|---|
| Sunflower oil | 95.3 | 95.4 | 95.4 |
| Rapeseed oil | 3.5 | 3.5 | 3.5 |
| Microcrystalline NaCl | 0.8 | 0.8 | 0.7 |
| B-carotene (mg/kg) | 10 | 10 | 10 |
| Citrem^{tm} LR 10 ex Danisco | 0.4 | 0.3 | 0.3 |
| Flavours (ppm) | 1500 | 1500 | 1500 |
| Results | | | |
| SV1 | 10 | 10 | 10 |
| SV2 | 4.5 | 4.5 | 6 |

All products showed a Bostwick value of about 11 cm per 30 seconds.

### Conclusion

Frying products comprising a combination of a salt and a citric ester, show good SV2 values, already at low concentrations of each of these ingredients.

## Claims

1. Pourable shortening composition comprising a salt and a citric acid ester of a partial fatty acid glyceride, wherein the ester is present in an amount of from 0.1 to 1 wt% on total weight of the shortening composition and wherein the salt is present in an amount of from 0.1 to 3 wt% on total weight of the shortening composition.

2. Pourable shortening composition according to any of the preceding claims, wherein the ester is a citric add ester of a mixture of a monoglyceride and a diglyceride, comprising at least 30 wt% of the monoglyceride.

3. Pourable shortening composition according to claim 2 wherein the ester is a citric acid ester with monoglyceride and diglyceride made from an unsaturated oil with an iodine value of at least 90, preferably sunflower oil.

4. Pourable shortening composition according to any of the preceding claims wherein the salt is microcrystalline sodium chloride.

5. Pourable shortening composition according to any of the preceding claims which shows a secondary spattering value of at least 4.0.

6. Use of a combination of a citric acid ester of partial fatty acid glycerides, and a salt to reduce secondary spattering of a pourable shortening composition.

## Patentansprüche

1. Gießbare Backfettzusammensetzung, die ein Salz und einen Citronensäureester eines Partialfettsäureglycerids umfasst, in der der Ester in einer Menge von 0,1 bis 1 Gew.-%, bezogen auf das Gesamtgewicht der Backfettzusammensetzung, vorliegt und in der das Salz in einer Menge von 0,1 bis 3 Gew.-%, bezogen auf das Gesamtgewicht der Backfettzusammensetzung, vorliegt.

2. Gießbare Backfettzusammensetzung nach einem der vorangehenden Ansprüche, in der der Ester ein Citronensäureester eines Gemisches eines Monoglycerids und eines Diglycerids, das wenigstens 30 Gew.-% des Monoglycerids umfasst, ist.

3. Gießbare Backfettzusammensetzung nach Anspruch 2, in der der Ester ein Citronensäureester mit Monoglycerid und Diglycerid, hergestellt aus einem ungesättigten Öl mit einer Iodzahl von wenigstens 90, vorzugsweise Sonnenblumenöl, ist.

4. Gießbare Backfettzusammensetzung nach einem der vorangehenden Ansprüche, in der das Salz mikrokristallines Natriumchlorid ist.

5. Gießbare Backfettzusammensetzung nach einem der vorangehenden Ansprüche, die einen sekundären Spritzwert von wenigstens 4,0 hat.

6. Verwendung einer Kombination eines Citronensäureesters von Partialfettsäureglyceriden und eines Salzes, um den sekundären Spritzwert einer gießbaren Backfettzusammensetzung zu reduzieren.

## Revendications

1. Composition de matière grasse fluide comprenant un sel et un ester d'acide citrique d'un glycéride d'acide gras partiel, dans laquelle l'ester est présent en une quantité de 0,1 à 1 % en poids par rapport au poids total de la composition de matière grasse, et dans laquelle le sel est présent en une quantité de 0,1 à 3 % en poids par rapport au poids total de la composition de matière grasse.

2. Composition de matière grasse fluide selon la revendication précédente, dans laquelle l'ester est un ester d'acide citrique d'un mélange d'un monoglycéride et d'un diglycéride, comprenant au moins 30 % en poids du monoglycéride.

3. Composition de matière grasse fluide selon la revendication 2, dans laquelle l'ester est un ester d'acide citrique avec un monoglycéride et un diglycéride provenant d'une huile insaturée ayant un indice d'iode d'au moins 90, de préférence l'huile de tournesol.

4. Composition de matière grasse fluide selon l'une quelconque des revendications précédentes, dans laquelle le sel est le chlorure de sodium monocristallin.

5. Composition de matière grasse fluide selon l'une quelconque des revendications précédentes, qui présente un indice d'éclaboussures secondaires d'au moins 4,0.

6. Utilisation d'une combinaison d'un ester d'acide citrique de glycérides d'acides gras partiels, et d'un sel, pour réduire les éclaboussures secondaires d'une composition de matière grasse fluide.
